# EUROPÄISCHE PATENTANMELDUNG

(11) **EP 2 557 403 A2**
(43) Veröffentlichungstag der Anmeldung: **13.02.2013**
(21) Anmeldenummer: 12178281.7
(22) Anmeldetag: 27.07.2012
(51) Int. Cl.: G01F 23/00, G01F 23/04

(54) **Vorrichtung zum Ermitteln einer Höhe einer Ablagerungsschicht an einem Boden eines Flüssigkeitstanks**

(30) Priorität: 06.08.2011 DE 102011109692
(71) Anmelder: Thomas Falkenstein Gewerbliche Vermietung und Verpachtung e.K., 73614 Schorndorf-Schlichten (DE)
(72) Erfinder: Falkenstein, Thomas, 73547 Lorch (DE)
(74) Vertreter: Witte, Weller & Partner

(57) **Zusammenfassung**

Die Erfindung betrifft eine Vorrichtung (10) zum Ermitteln einer Höhe einer Ablagerungsschicht am Boden eines Flüssigkeitstanks, insbesondere eines Rohöltanks. Die Vorrichtung (10) weist ein erstes Stabelement (12) und ein zweites Stabelement (14) auf. Das zweite Stabelement (14) ist relativ zu dem ersten Stabelement (12) in einer Bewegungsrichtung bewegbar, wobei das erste Stabelement (12) mindestens ein Führungselement (24) aufweist, das das zweite Stabelement (14) hält und die Bewegungsrichtung definiert. Zudem weist die Vorrichtung (10) eine Messvorrichtung (36, 38) zum Ermitteln eines Bewegungswegs des zweiten Stabelements (14) relativ zu dem ersten Stabelement (12) auf.

## Beschreibung

Die Erfindung betrifft eine Vorrichtung zum Ermitteln einer Höhe einer Ablagerungsschicht am Boden eines Flüssigkeitstanks, insbesondere eines Rohöltanks.

Eine solche Vorrichtung ist aus DE 695 10 685 T2 bekannt.

Rohöltanks werden zum Lagern größerer Mengen Rohöl mit einem Fassungsvermögen von ca. 100.000 m³ eingesetzt. Derartige Rohöltanks können bspw. als Schwimmdachtanks ausgeführt sein, bei denen ein scheibenförmiges Dach auf dem Rohöl schwimmt, welches sich bei einem Zu- oder Abfluss von Rohöl in vertikaler Richtung auf- bzw. abbewegen kann.

Im Laufe der Zeit bilden sich am Boden derartiger Rohöltanks Ablagerungen, die durch Absinken schwerer Bestandteile des Rohöls entstehen und als "Gatch" oder "Rohölsumpf" bezeichnet werden. Die Ablagerungen haben häufig eine sedimentartig feste Konsistenz und eine vergleichsweise glitschige Oberfläche. Art und Stärke der Ablagerungen hängen unter anderem von der gelagerten Rohölsorte, der Lagermenge, der Umschlaghäufigkeit und der Tankgröße ab. Die Ablagerungen müssen in regelmäßigen Abständen entfernt oder bestimmt werden, wozu in der Regel zunächst das Rohöl abgelassen wird und dann die Ablagerungen mechanisch von dem Tankboden abgetragen oder wobei die Ablagerungen bei geöffnetem Tank abgemessen werden.

Die Ablagerungen müssen entfernt werden, da sie Wasser umschließen können und sich Sedimente bilden können. Wenn zuviel Sediment vorhanden ist, kann das Schwimmdach möglicherweise auf dem Sediment aufsitzen und dadurch beschädigt werden.

Um festzustellen, ob die Ablagerungen entfernt werden müssen, wird typischerweise geprüft, wie hoch die Ablagerungsschicht ist. Zu diesem Zweck wird der Schwimmdachtank an verschiedenen Tankdachstutzen geöffnet, so dass ein freier Zugang zu dem Inhalt des Tanks besteht. Anschließend wird ein Peilstab manuell von einem Benutzer durch die Öffnung in den Tank geführt. Dieser muss möglichst senkrecht in den Rohöltank eingeführt werden, um Messfehler zu minimieren. Sobald ein Widerstand an dem Peilstab für einen Benutzer ertastet wird, ist davon auszugehen, dass der Peilstab an der Oberfläche der Ablagerungsschicht durch die Flüssigkeit hindurch angekommen ist. In diesem Moment wird eine aktuelle Position des Peilstabs bestimmt. Anschließend wird der Peilstab durch die Ablagerungsschicht hindurch bis zum Boden des Rohöltanks geführt. Dann wird ein weiteres Mal die Position des Peilstabs bestimmt. Durch Differenzbildung zwischen den beiden Positionen kann die Höhe der Ablagerungsschicht an dem entsprechenden Messpunkt bestimmt werden. Typischerweise wird die Höhe der Ablagerungsschicht an verschiedenen Stellen gemessen, so dass insgesamt ein Höhenprofil der Ablagerungsschicht bestimmt werden kann. In Abhängigkeit des Höhenprofils lässt sich dann ein Volumen der Ablagerungsschicht abschätzen.

Nachteil des beschriebenen Vorgehens ist es, dass die Oberfläche der Ablagerungsschicht manuell ertastet werden muss. Fehler beim Ertasten der Oberfläche führen zwangsläufig zu Fehlern beim Erfassen der Höhe der Ablagerungsschicht. Da das genannte Vorgehen taktil durch einen Benutzer gesteuert wird, hängt die Güte der Messung von den Fähigkeiten des jeweiligen Benutzers ab.

DE 695 10 685 T2 beschreibt ein Verfahren und eine Vorrichtung zur Ermittlung einer Topographie einer aus Ablagerungen bestehenden Schicht auf dem Boden eines mit Öl gefüllten Behälters. Hierbei weist die Vorrichtung einen Sonarkopf auf, der in das Öl abgesenkt werden kann. Der Sonarkopf weist ein Mittel zur Aussendung von Schallenergie und ein interferometrisches Empfangsmittel auf, mit denen dieser Distanzmessungen vornehmen kann. Ferner ist ein Mittel zum Drehen des Sonarkopfes in einer horizontalen Ausrichtung nach dem Absenken vorgesehen. Insgesamt wird vorgeschlagen, eine Ablagerungsschicht mit einem Sonar zu vermessen. Nachteil hierbei ist ein hoher wirtschaftlicher und technischer Aufwand.

Es ist daher Aufgabe der Erfindung, eine Vorrichtung zum Ermitteln der Höhe der Ablagerungsschicht bereitzustellen, die wirtschaftlich eingesetzt werden kann und die gleichzeitig eine sehr genaue Erfassung der Höhe der Ablagerungsschicht ermöglicht.

Bei der Vorrichtung der eingangs genannten Art wird diese Aufgabe gelöst durch ein erstes Stabelement, ein zweites Stabelement, das relativ zu dem ersten Stabelement in einer Bewegungsrichtung bewegbar ist, wobei das erste Stabelement mindestens ein Führungselement aufweist, das das zweite Stabelement hält und die Bewegungsrichtung definiert, und eine Messvorrichtung zum Ermitteln eines Bewegungswegs des zweiten Stabelements relativ zu dem ersten Stabelement.

Die Erfindung basiert auf der Idee, dass das erste Stabelement gemeinsam mit dem zweiten Stabelement durch ein Schwimmdach hindurch in den Tank geführt werden kann. Dies kann beispielsweise bei Tankdachstützen erfolgen. Das erste Stabelement ist vorzugsweise derart ausgebildet, dass es durch die Oberfläche der Ablagerungsschicht nicht oder nur schwer hindurchstoßen kann. Das zweite Stabelement ist vorzugsweise derart ausgebildet, dass es leichter als das erste Stabelement bis zum Boden des Tanks geführt werden kann. Eine Messung der Höhe der Ablagerungsschicht wird dadurch möglich, dass ein Bewegungsweg in Abhängigkeit einer Differenz zwischen der Position des ersten Stabelements und der Position des zweiten Stabelements bestimmt wird, wobei das erste Stabelement auf der Oberfläche der Ablagerungsschicht steht und das zweite Stabelement auf dem Boden des Tanks steht. Das erste Stabelement erstreckt sich dabei vorzugsweise durch die Flüssigkeit hindurch, die beispielsweise Rohöl sein kann.

Das erste Stabelement weist eine erste Längsachse auf, in die es sich im Wesentlichen erstreckt. Das zweite Stabelement weist eine zweite Längsachse auf, in die es sich im Wesentlichen erstreckt. Bevorzugt ist es, wenn die erste Längsachse parallel zu der zweiten Längsachse angeordnet ist. Ferner ist es bevorzugt, wenn die Bewegungsrichtung des zweiten Stabelements in Richtung der zweiten Längsachse verläuft. Somit lässt sich das zweite Stabelement parallel zu dem ersten Stabelement bewegen.

Weiter ist es bevorzugt, wenn das erste Stabelement in seinem Endbereich, also in dem Bereich der zu der Ablagerungsschicht geführt wird, eine möglichst große Querschnittsfläche orthogonal zu der ersten Längsachse aufweist. Die Querschnittsfläche des ersten Stabelements ist vorzugsweise größer als die Querschnittsfläche des zweiten Stabelements orthogonal zu der zweiten Längsachse und in dessen Endbereich. Somit wird erreicht, dass das erste Stabelement schwerer durch die Ablagerungsschicht geführt werden kann als das zweite Stabelement. Folglich kann das erste Stabelement als Referenz für einen Bewegungsweg des zweiten Stabelements dienen.

Insgesamt ergibt sich somit eine Vorrichtung, die sehr robust ist und gleichzeitig eine sehr einfache Handhabung sowie eine wirtschaftliche Herstellung ermöglichen.

In einer weiteren Ausgestaltung weist das erste Stabelement ein Widerstandselement auf.

In dieser Ausgestaltung weist das erste Stabelement ein strömungstechnisches Widerstandselement auf. Das Widerstandselement ist vorzugsweise in dem Endbereich des ersten Stabelements angeordnet. Es erhöht den strömungstechnischen Widerstand des ersten Stabelements bei einer Bewegung in Richtung der ersten Längsachse auf der Oberfläche der Ablagerungsschicht. Das Widerstandselement kann bspw. durch ein Ringelement gebildet werden, dessen Ringfläche sich quer zu der Längsachse erstreckt. Alternativ ist es denkbar, dass der Endbereich des ersten Stabelements trichterförmig ausgebildet ist. Hierbei öffnet sich der Trichter in Richtung der Ablagerungsschicht. Das erste Stabelement kann so ähnlich einem Skistock mit einem Teller ausgestaltet sein, der ein Eindringen des ersten Stabelements in die Ablagerungsschicht verhindert.

Die Verwendung eines Widerstandselements hat den Vorteil, dass ein Einsinken des ersten Stabelements in die Ablagerungsschicht wirksam verhindert wird. Gleichzeitig wird ein erhöhter Widerstand erzeugt, der einem Benutzer ein besonders deutliches taktiles Signal gibt, wenn das Widerstandselement durch das Öl hindurch auf die Ablagerungsschicht trifft. Der untere Bereich des Widerstandselements, also der Bereich des Widerstandselements, der bei einem Einführen als erstes auf die Ablagerungsschicht trifft, definiert dann eine Referenzebene für die Oberfläche der Ablagerungsschicht. Durch anschließendes Einführen des zweiten Stabelements in die Ablagerungsschicht, kann der Bewegungsweg zwischen dem ersten Stabelement und dem zweiten Stabelement festgestellt werden, welcher der Höhe der Ablagerungsschicht an dem entsprechenden Punkt entspricht.

In einer weiteren Ausgestaltung ist das erste Stabelement ein Rohrelement.

In dieser Ausgestaltung ist das Stabelement als Rohr, insbesondere Kreisrohr, ausgeführt, wobei sich ein Mantel des Rohrelements umfänglich um die erste Längsachse erstreckt. Vorteil hierbei ist es, dass ein sehr leichtes erstes Stabelement verwendet werden kann, wobei gleichzeitig eine hohe Biegefestigkeit erreicht wird. Besonders vorteilhaft ist es, dass eine Auflagefläche im Endbereich des ersten Stabelements über einen großen Bereich der Oberfläche der Ablagerungsschicht erstreckt, so dass die Oberfläche der Ablagerungsschicht sehr sicher erfasst werden kann, ohne dass geringfügige und örtlich begrenzte Erhebungen einen starken Einfluss auf das erste Stabelement haben. Zudem erleichtert das Rohrelement ein Einführen des ersten Stabelements in das Öl. Die viskose oder pastöse Flüssigkeit kann dann sowohl um das erste Stabelement als auch durch das erste Stabelement hindurchfließen.

Besonders bevorzugt ist eine Kombination des Rohrelements mit einem trichterförmigen Widerstandselement in dem Endbereich. Hierdurch wird ein besonders gutes und einfaches Einführen des ersten Stabelements in das Rohöl erreicht und gleichzeitig ein ausreichender hydrostatischer Widerstand an der Oberfläche der Ablagerungsschicht gewährleistet.

In einer weiteren Ausgestaltung weist mindestens eines der Stabelemente eine Vielzahl an Stabsegmenten auf.

In dieser Ausgestaltung ist mindestens eines der Stabelemente mehrteilig ausgebildet. Das Stabelement weist eine Vielzahl an Stabsegmenten auf, die lösbar miteinander verbunden sind. Vorteil hierbei ist, dass die Vorrichtung, zumindest das eine Stabelement, für einen Transport zerlegt werden kann. Ein weiterer Vorteil ist es, dass unterschiedlich lange Stabelemente durch Hinzufügen oder Herausnehmen von einzelnen Stabsegmenten bei Bedarf bereitgestellt werden können.

Bei einem derart aufgebauten ersten Stabelement ist es besonders bevorzugt, wenn das Widerstandselement ebenfalls lösbar mit einem der Stabsegmente verbunden ist. Somit kann auch das Widerstandselement bei Bedarf ausgetauscht werden.

Bei einem zweiten Stabelement, welches aus seiner Vielzahl an Stabsegmenten besteht, ist es besonders bevorzugt, wenn ein Stabsegment den Endbereich bildet, das mit einer Spitze versehen ist. Die Spitze erleichtert ein Eindringen des zweiten Stabelements in die Ablagerungsschicht in vorteilhafter Weise.

In einer weiteren Ausgestaltung ist das mindestens eine Führungselement eine Führungsöse.

In dieser Ausgestaltung ist das Führungselement als Führungsöse ausgebildet, die mit dem ersten Stabelement verbunden ist. Vorzugsweise wird eine Vielzahl von Führungsösen verwendet. Die Führungsösen weisen Öffnungen auf, die das zweite Stabelement führen können.

Vorteil hierbei ist es, dass Führungsösen wirtschaftlich eingesetzt werden können und bereits für industrielle Zwecke verfügbar sind. Beispielsweise kann es sich um Schraubösen handeln, welche mit dem ersten Stabelement verschraubt werden. Die Schraubösen bestehen aus einem im Wesentlichen kreisringförmigen Element, das die Öffnung bildet. Ausgehend von dem kreisringförmigen Element erstreckt sich radial eine Gewindestange, die zur Befestigung an dem ersten Stabelement dient. Zudem ergibt sich eine sehr einfache Möglichkeit bei einer Verwendung einer Vielzahl an Stabsegmenten, da die Führung des zweiten Stabelements insgesamt sehr einfach über alle Stabsegmente fortgeführt werden kann, auch wenn einzelne Stabsegmente hinzugefügt werden.

In einer weiteren Ausgestaltung weist das Führungselement ein Abstreifelement auf.

In dieser Ausgestaltung ist ein Abstreifelement vorgesehen, welches von dem Führungselement gehalten wird. Das Abstreifelement umschließt das geführte zweite Stabelement zumindest teilweise. Dies erfolgt vorzugsweise umfänglich um die zweite Längsachse. Ein solches Abstreifelement kann bspw. durch einen O-Ring oder eine Gummirosette gebildet werden.

Das Abstreifelement hat den Vorteil, dass das zweite Stabelement dann von Verunreinigungen, wie bspw. anhaftendem Öl, gereinigt wird, wenn das zweite Stabelement durch die Abstreifelemente hindurchgeführt wird.

In einer weiteren Ausgestaltung weist die Messvorrichtung eine Peilvorrichtung auf, die an dem ersten Stabelement angeordnet ist, und eine Skala, die an dem zweiten Stabelement angeordnet ist.

In dieser Ausgestaltung ist die Messvorrichtung zweiteilig ausgebildet. Zum einen ist eine Peilvorrichtung vorgesehen, die an dem ersten Stabelement angeordnet ist. Über die Peilvorrichtung kann in einer definierten Sichtrichtung von einem Benutzer auf das zweite Stabelement gepeilt werden. Das zweite Stabelement weist in dem Bereich auf den gepeilt werden kann eine Skala auf. Somit können einzelne Positionen und damit ein Höhenunterschied zwischen dem Endbereich des ersten Stabelements und dem Endbereich des zweiten Stabelements abgelesen werden.

Besonders bevorzugt ist es, wenn die Peilvorrichtung als modularer Peilkopf ausgebildet ist, welcher auf dem erste Stabelement oder einem entsprechenden Stabsegment angeordnet werden kann. Dies kann bspw. durch Aufschrauben erfolgen.

Alternativ oder zusätzlich können weitere Arten von Messvorrichtungen eingesetzt werden, die dazu ausgebildet sind, den Bewegungsweg zwischen dem ersten Stabelement und dem zweiten Stabelement zu erfassen oder diesen darzustellen. Dies kann bspw. durch einen Wegmesser erfolgen, welcher an dem ersten Stabelement fest angeordnet ist und über ein Reibrad mit dem zweiten Stabelement zusammenwirkt. Wird das zweite Stabelement bewegt, so dreht sich das Reibrad und eine entsprechende Zählvorrichtung erfasst den Weg zwischen dem ersten Stabelement und dem zweiten Stabelement. Ferner ist es denkbar, dass der Peilkopf optische Mittel, wie eine Linsenanordnung, aufweist mit denen besonders genau auf die Skala des zweiten Stabelements gepeilt werden kann. Auch ist es denkbar, dass das erste Stabelement mit einer aktiven optischen Vorrichtung ausgestattet ist, die die Skala markiert, bspw. eine Laserdiode.

Besonders bevorzugt ist es, wenn das erste Stabelement mit unterschiedlichen Messvorrichtungen zusammenwirken kann. Hieraus ergibt sich ein modularer Aufbau der gesamten Vorrichtung, wobei einzelne Komponenten nachgerüstet oder ausgetauscht werden können.

In einer weiteren Ausgestaltung weist das erste Stabelement eine Skala auf.

In dieser Ausgestaltung ist auch an dem ersten Stabelement eine Skala angebracht. Die Skala erstreckt sich vorzugsweise von dem Endbereich des ersten Stabelements bis zu dem Anfangsbereich des ersten Stabelements. Durch Anbringung der Skala wird ermöglicht, dass zusätzlich zu der Höhe der Ablagerungsschicht auch eine Höhe der Flüssigkeit oberhalb der Ablagerungsschicht erfasst werden kann. Somit können sehr einfach durch einen einzelnen Messvorgang Informationen darüber erfasst werden, wie hoch die Ablagerungsschicht ist und wie viel Flüssigkeit noch innerhalb des Tanks vorhanden ist.

Zudem besitzt diese Skala den Vorteil, dass die Höhe in der Ablagerungsschicht sehr schnell mit der Höhe des Rohöls über der Ablagerungsschicht addiert werden kann. Somit kann überprüft werden, ob dies einer angenommenen Höhe des Tankdeckels entspricht und damit das zweite Stabelement tatsächlich am Boden ist.

In einer weiteren Ausgestaltung weist die Vorrichtung eine Sicherungsvorrichtung zum sicheren Fixieren des zweiten Stabelements an dem ersten Stabelement auf.

In dieser Ausgestaltung ist eine Sicherungsvorrichtung vorgesehen, die eine unerwünschte Bewegung des zweiten Stabelements verhindert. Die Sicherungsvorrichtung dient dabei insbesondere als Transportsicherung, so dass die Vorrichtung im Gesamten sehr einfach und gefahrlos transportiert werden kann. Zudem wird durch die Sicherungsvorrichtung ermöglicht, dass ein Benutzer das zweite Stabelement in den Rohöltank einführen kann, ohne dass das zweite Stabelement unkontrolliert verrutschen und bspw. innerhalb des Tanks verlorengehen kann.

Als Sicherungsvorrichtung ist es denkbar, dass eine Klemmschraube an dem Führungselement vorgesehen ist. Die Klemmschraube kann dann das zweite Stabelement sicher festklemmen und unerwünschte Bewegungen verhindern. Ferner ist es denkbar, dass das zweite Stabelement eine Nase aufweist, die sich radial von der zweiten Längsachse erstreckt. Zudem ist dann vorgesehen, dass das Führungselement eine Öffnung mit einem entsprechenden Profil aufweist, sodass das zweite Stabelement nur in einer bestimmten Drehposition durch das Führungselement hindurch bewegt werden kann.

Weiter wird die Aufgabe durch ein Stabelement für eine Vorrichtung zum Ermitteln einer Höhe einer Ablagerungsschicht am Boden eines Flüssigkeitstanks gelöst, das mindestens ein Führungselement zum Führen eines zweiten Stabelements relativ zu dem Stabelement aufweist und das mindestens einen Teil einer Messvorrichtung zum Ermitteln eines Bewegungswegs des zweiten Stabelements relativ zu dem ersten Stabelement aufweist.

Das Stabelement kann bevorzugt mit bereits vorhandenen zweiten Stabelementen verwendet werden. Somit besteht der Vorteil eines einfachen Nachrüstens bereits vorhandener Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Ausführungsform der erfindungsgemäßen Vorrichtung in einer Seitenansicht,
- Fig. 2: ein Rohöltank in einem Querschnitt mit der erfindungsgemäßen Vorrichtung in einer ersten Messposition, und
- Fig. 3: den Rohöltank aus Fig. 2 mit der Vorrichtung in einer zweiten Messposition.

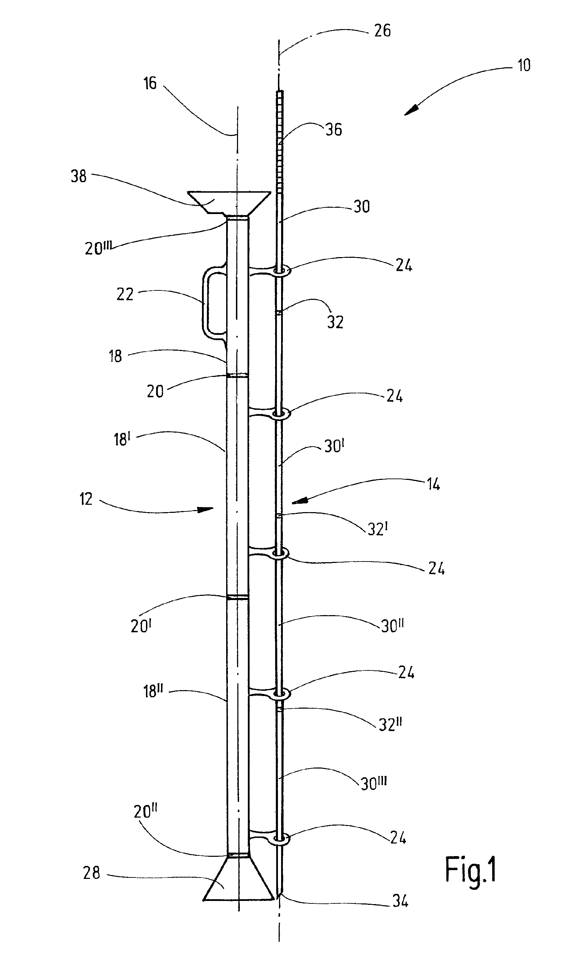

In Fig. 1 ist die erfindungsgemäße Vorrichtung in einer Seitenansicht dargestellt und in ihrer Gesamtheit mit der Bezugsziffer 10 bezeichnet. Die Vorrichtung 10 weist ein erstes Stabelement 12 und ein zweites Stabelement 14 auf. Das erste Stabelement 12 erstreckt sich entlang einer ersten Längsachse 16. Das erste Stabelement 12 ist als Rohrelement ausgebildet, das aus drei ersten Stabsegmenten 18, 18' und 18" besteht. Die ersten Stabsegmente 18, 18' und 18" sind an zwei Verschraubungsstellen 20 und 20' lösbar miteinander verschraubt. Die Verschraubung erfolgt hierbei derart, dass das erste Stabsegment 18' an der Verschraubungsstelle 20 ein Außengewinde aufweist, welches mit einem Innengewinde des ersten Stabsegments 18 an der Verschraubungsstelle 20 zusammenwirkt. Die ersten Stabsegmente 18' und 18" sind in entsprechender Weise an der Verschraubungsstelle 20' miteinander verbunden. Hieraus ergibt sich die Möglichkeit, dass in sehr einfacher Weise erste Stabsegmente hinzugefügt oder herausgenommen werden können, um eine Gesamtlänge des ersten Stabelements 12 entlang der Längsachse 16 zu variieren. Zudem weist das erste Stabelement 12 an dem ersten Stabsegment 18 einen Griff 22 auf, der eine besonders einfache Handhabung der gesamten Vorrichtung 10 für einen Benutzer ermöglicht. Zudem sind an dem ersten Stabelement 12 mehrere Führungsösen 24 angeordnet. Die Führungsösen 24 weisen jeweils Öffnungen auf, die entlang einer Längsachse 26 des zweiten Stabelements 14 fluchten. Somit besteht die Möglichkeit, dass das zweite Stabelement 14 von den Führungsösen 24 in Richtung der Längsachse 26 geführt wird und somit eine Bewegungsrichtung in Richtung der Längsachse 26 definiert ist.

Das erste Stabelement 12 weist zudem ein Widerstandselement 28 auf, welches hier trichterförmig ausgebildet ist. Das Widerstandselement 28 ist über eine Schraubverbindung an einer Verschraubungsstelle 20" mit dem ersten Stabelement 12 lösbar verbunden. Das Widerstandselement 28 ist hier ein trichterförmiges Element in Form eines Kegelstumpfmantels, welcher zu einem Innenraum des Stabelements 12 offen ist. Somit kann Rohöl aus dem trichterförmigen Bereich des Widerstandselements 28 in das erste Stabelement 12 eindringen. Das trichterförmige Widerstandselement 28 bildet in Richtung der Längsachse 16 eine ringförmige Oberfläche. Die ringförmige Oberfläche erstreckt sich dabei über einen größeren Bereich orthogonal zu der Längsachse 16 als der Querschnitt des ersten Stabelements 12. Mit anderen Worten ist das trichterförmige Element 28 mit einem schmalen Ende bzw. mit einem Trichterhals mit der Verschraubungsstelle 20" verbunden, so dass ein Innenraum des trichterförmigen Elements 28 mit dem Innenraum des Stabelements 12 verbunden ist. Das trichterförmige Element 28 öffnet sich zu einer der Verschraubungsstelle 20" abgewandten Seite. Hierdurch kann die Vorrichtung 10 sehr sicher auf eine Ablagerungsschicht aufgesetzt werden, ohne durch zufällige Erhebungen stark beeinflusst werden. Gleichzeitig erzeugt die trichterförmige Struktur einen wachsenden Widerstand beim Eindringen in die Ablagerungsschicht.

Das zweite Stabelement 14 weist zweite Stabsegmente 30, 30', 30" und 30'" auf. Die zweiten Stabsegmente 30, 30', 30" und 30'" sind an Verschraubungsstellen 32, 32' und 32" lösbar miteinander verbunden. Das zweite Stabelement 14 ist aus einem Vollmaterial gebildet, bspw. Aluminium. An der Verschraubungsstelle 32 weist das zweite Stabsegment 30' ein Außengewinde auf, das mit einem Innengewinde des zweiten Stabsegments 30 zusammenwirkt. Die weiteren Stabsegmente 30', 30" und 30'" sind jeweils in entsprechender Weise ausgebildet, so dass diese an den Verschraubungsstellen 32' und 32" lösbar miteinander verbunden sind. Somit kann auch das zweite Stabelement 14 in seiner Länge variiert werden, indem zusätzliche zweite Stabsegmente eingefügt oder entnommen werden. Das zweite Stabsegment 30'" weist in seinem Endbereich zudem eine Spitze 34 auf. Die Spitze 34 ist derart ausgebildet, dass sich das zweite Stabelement 14 sehr einfach durch eine Oberfläche der Ablagerungsschicht hindurchführen lässt. Zudem weist das zweite Stabsegment 30 eine Skala 36 auf, die mit einem Peilkopf 38 zusammenwirkt. Der Peilkopf 38 ist an einer Verschraubungsstelle 20'" mit dem ersten Stabsegment 18 lösbar verbunden. Die Skala 36 sowie der Peilkopf 38 bilden gemeinschaftlich eine Messvorrichtung. Durch optisches Peilen über eine Oberfläche des Peilkopfs 38 kann ein definierter Wert von der Skala 36 abgelesen werden, wobei Messfehler, wie bspw. ein Parallaxefehler, vermieden werden.

Der Vollständigkeit halber wird darauf hingewiesen, dass die Erfindung nicht auf Messvorrichtungen beschränkt ist, die einen Peilkopf und eine Messskala aufweisen. Vielmehr eignen sich alle Messvorrichtungen im Rahmen der Erfindung, die einen Bewegungsweg zwischen dem ersten Stabelement 12 und dem zweiten Stabelement 14 erfassen oder visualisieren können.

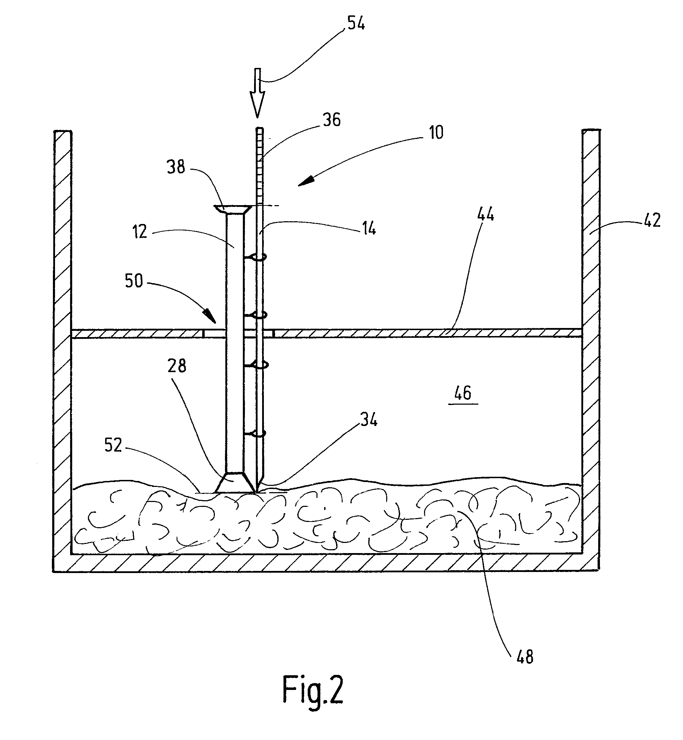

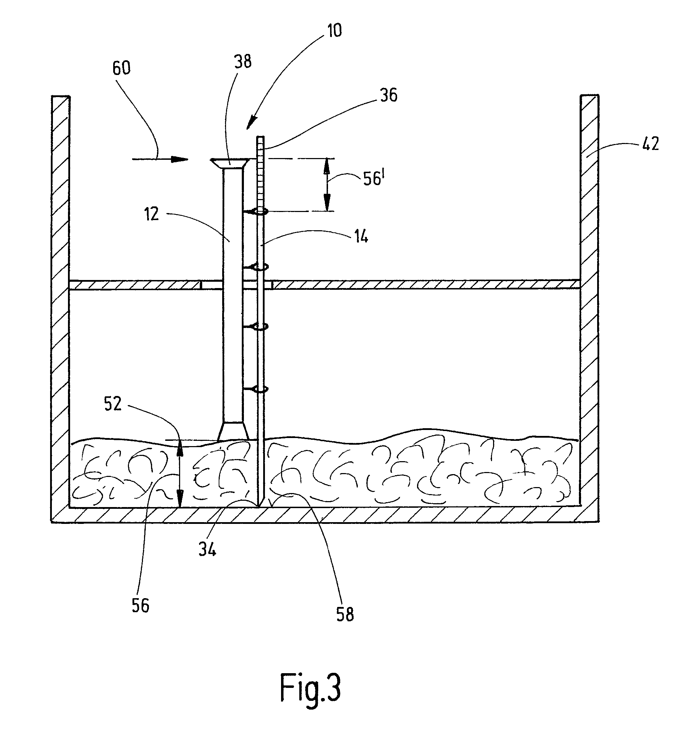

Die Funktionsweise der erfindungsgemäßen Vorrichtung 10 wird nunmehr mit Bezug zu den Figuren 2 und 3 beschrieben.

Fig. 2 zeigt einen Rohöltank 42, der durch ein Schwimmdach 44 verschlossen ist. Das Schwimmdach 44 schwimmt auf einer Rohölphase 46, welche einen Teil des Rohöltanks 42 ausfüllt. Die Rohölphase 46 befindet sich oberhalb einer Ablagerungsschicht 48, die aus abgesetzten Teilchen des Öls besteht. Zur Messung der Höhe der Ablagerungsschicht 48 wird die erfindungsgemäße Vorrichtung 10 durch eine Öffnung 50 in dem Schwimmdach 44 in den Rohöltank 42 eingeführt. Dies erfolgt solange, bis das erste Stabelement 12 mit seinem Widerstandselement 28 auf die Oberfläche der Ablagerungsschicht 48 trifft. Durch den hohen hydrostatischen Widerstand des Widerstandselements 28 verbleibt das erste Stabelement 12 trotz seines Eigengewichts in dieser Position. Der untere Bereich des Widerstandselements 28 definiert dabei eine Referenzebene 52. Die Spitze 34 des zweiten Stabelements 14 erstreckt sich zudem ebenfalls bis zu der Referenzebene 52. Die Skala 36 ist derart angebracht, dass in dieser Position bei einem Peilen über den Peilkopf 38 ein Bewegungsweg von 0 gemessen werden kann.

In einem weiteren Schritt wird das zweite Stabelement 14 in Richtung eines Pfeils 54 weiter in den Rohöltank 42 hineingeführt. Hierdurch wird die Spitze 34 um einen Bewegungsweg weiterbewegt, der einer Höhe 56 bis zu einem Boden 58 des Rohöltanks 42 entspricht. Die Höhe 56 definiert sich somit zwischen dem Boden 58 und der Ebene 52. Nunmehr kann abermals entlang eines Pfeils 60 über den Peilkopf 38 gepeilt werden. Anschließend kann ein Wert für die Höhe 56 an der Skala 36 abgelesen werden. Dies ergibt sich daraus, dass die Skala 36 ebenfalls um den Betrag der Höhe 56' entsprechend verlagert wird.

Bevorzugt ist es, wenn der so erfasste Wert datenverarbeitungstechnisch erfasst wird, beispielsweise in einer Datenbank. Dies ist insbesondere dann von Vorteil, wenn die Höhe 56 durch verschiedene Öffnungen 50 des Schwimmdachs 44 und damit an verschiedenen Messpositionen erfasst wird. Somit wird eine Vielzahl von Höhen 56 erfasst, die als Stützstellen für eine Approximation einer Topographie der Ablagerungsschicht 48 innerhalb des Rohöltanks 42 dienen können.

## Patentansprüche

1. Vorrichtung (10) zum Ermitteln einer Höhe (56) einer Ablagerungsschicht (48) am Boden (56) eines Flüssigkeitstanks (42), insbesondere eines Rohöltanks (42), **gekennzeichnet durch** ein erstes Stabelement (12), ein zweites Stabelement (14), das relativ zu dem ersten Stabelement in einer Bewegungsrichtung bewegbar ist, wobei das erste Stabelement (12) mindestens ein Führungselement (24) aufweist, das das zweite Stabelement (14) hält und die Bewegungsrichtung definiert, und eine Messvorrichtung (36, 38) zum Ermitteln eines Bewegungswegs des zweiten Stabelements (14) relativ zu dem ersten Stabelement (12).

2. Vorrichtung nach Anspruch 1, **dadurch gekennzeichnet, dass** das erste Stabelement (12) ein Widerstandselement (28) aufweist.

3. Vorrichtung nach Anspruch 2, **dadurch gekennzeichnet, dass** das Widerstandselement (28) trichterförmig ausgebildet ist.

4. Vorrichtung nach einem der Ansprüche 1 bis 3, **dadurch gekennzeichnet, dass** das erste Stabelement (12) ein Rohrelement (12) ist.

5. Vorrichtung nach Anspruch 4, **dadurch gekennzeichnet, dass** ein Innenraum des trichterförmigen Widerstandselements (28) mit einem Innenraum des Stabelements (12) verbunden ist.

6. Vorrichtung nach einem der Ansprüche 1 bis 3, **dadurch gekennzeichnet, dass** mindestens eines der Stabelemente (12, 14) eine Vielzahl an Stabsegmenten (18, 30) aufweist.

7. Vorrichtung nach Anspruch 6, **dadurch gekennzeichnet, dass** die Stabsegmente (18, 30) lösbar miteinander verbunden sind.

8. Vorrichtung nach einem der Ansprüche 1 bis 7, **dadurch gekennzeichnet, dass** das mindestens eine Führungselement (24) eine Führungsöse (24) ist.

9. Vorrichtung nach einem der Ansprüche 1 bis 8, **dadurch gekennzeichnet, dass** das Führungselement (24) ein Abstreifelement aufweist.

10. Vorrichtung nach einem der Ansprüche 1 bis 9, **dadurch gekennzeichnet, dass** die Messvorrichtung (36, 38) eine Peilvorrichtung (38) aufweist, die an dem ersten Stabelement (12) angeordnet ist, und eine Skala (36) aufweist, die an dem zweiten Stabelement (14) angeordnet ist.

11. Vorrichtung (10) nach einem der Ansprüche 1 bis 10, **dadurch gekennzeichnet, dass** das erste Stabelement (12) eine Skala aufweist.

12. Vorrichtung (10) nach einem der Ansprüche 1 bis 11, **gekennzeichnet durch** eine Sicherungsvorrichtung zum sichern Fixieren des zweiten Stabelements (14) an dem ersten Stabelement (12).

13. Stabelement (12) für eine Vorrichtung (10) zum Ermitteln einer Höhe (56) einer Ablagerungsschicht (48) am Boden (56) eines Flüssigkeitstanks (42), das mindestens ein Führungselement (24) zum Führen eines zweiten Stabelements (14) relativ zu dem Stabelement (12) aufweist und das mindestens einen Teil (38) einer Messvorrichtung (36, 38) zum Ermitteln eines Bewegungswegs des zweiten Stabelements (14) relativ zu dem ersten Stabelement (12) aufweist.
